# FASCICULE DE BREVET EUROPEEN

(11) **EP 4 496 940 B1**
(45) Date de publication et mention de la délivrance du brevet: **11.03.2026**
(21) Numéro de dépôt: 23711700.7
(22) Date de dépôt: 13.03.2023
(51) Int. Cl.: F01M 11/03, F01M 11/00, F01M 1/10, B01D 35/30

(54) **VÉHICULE À MOTEUR COMPRENANT UN FILTRE À HUILE DE GÉOMÉTRIE SIMPLIFIÉE**
KRAFTFAHRZEUG MIT EINEM ÖLFILTER MIT VEREINFACHTER GEOMETRIE
MOTOR VEHICLE COMPRISING AN OIL FILTER WITH SIMPLIFIED GEOMETRY

(30) Priorité: 22.03.2022 FR 2202547
(43) Date de publication de la demande: 29.01.2025
(73) Titulaire: Horse Powertrain Solutions, S.L.U., 28108 Alcobendas Madrid (ES)
(72) Inventeur: CANINI, Claudio, 78084 Guyancourt (FR); CHEVALIER, Fabien, 78084 Guyancourt (FR); FRADET, Valentin, 78084 Guyancourt (FR)
(74) Mandataire: Elzaburu S.L.P.
(86) Numéro de dépôt international: PCT/EP2023/056368
(87) Numéro de publication internationale: WO 2023/180117

(56) Documents cités:
- EP-A1- 1 276 974
- CN-A- 112 594 027
- ES-T3- 2 973 034
- PL-T3- 4 085 986
- US-A1- 2017 239 599
- US-A1- 2018 252 128
- US-A1- 2021 062 692

## Description

La présente invention concerne un véhicule à moteur, comprenant un filtre à huile de géométrie simplifiée.

Un filtre à huile est généralement placé dans un circuit de lubrification de pièces mobiles d'un moteur à combustion interne formant une boucle de circulation d'huile fermée. Ce filtre reçoit de l'huile en provenance d'une branche amont de ce circuit de lubrification, qui est généralement dotée d'une pompe à huile, et évacue l'huile filtrée vers une branche aval dudit circuit de lubrification, qui est en communication fluidique avec les pièces mobiles du moteur à lubrifier.

Un filtre à huile classique se présente sous la forme d'un boîtier complet et indépendant, comprenant une cartouche filtrante engainée dans un corps généralement métallique. Le boîtier comprend un corps de forme généralement cylindrique, et un fond qui repose sur un composant du moteur, pouvant être un carter inférieur contenant une réserve d'huile pour la lubrification du moteur.

Le filtre à huile est alimenté en huile grâce à une pompe à huile actionnée par le moteur depuis le carter inférieur, et ledit filtre renvoie l'huile filtrée vers les pièces du moteur à lubrifier. Par exemple, le bloc complet représentant le filtre à huile est muni d'un pas de vis pour être monté sur une tubulure du carter inférieur du moteur, par laquelle l'huile filtrée ressortira. L'huile pénètre dans ce bloc à travers une pluralité d'orifices ménagés dans le fond du filtre. Le fond du filtre à huile est muni d'un joint pour assurer une étanchéité avec le carter inférieur du moteur. Le filtre à huile comporte généralement des moyens de dérivation sous la forme d'un clapet de décharge (ou « by-pass »), qui assure la circulation de l'huile à travers le filtre à huile, sans passer par la cartouche filtrante dans le cas où celle-ci serait colmatée. Il peut également comprendre un clapet anti-retour pour éviter un reflux d'huile vers la pompe à huile.

Or, un circuit de lubrification impliquant un tel filtre à huile présente plusieurs inconvénients :
- le filtre à huile est lourd en raison de la présence d'éléments métalliques à l'intérieur de celui-ci,
- le filtre à huile n'est pas facilement réutilisable lorsque la cartouche filtrante est encrassée et se colmate, car dans ce cas il faut changer l'ensemble du filtre à huile, demeurant une opération longue et coûteuse,
- la branche amont du circuit de lubrification qui est généralement dotée d'une pompe à huile et la branche aval dudit circuit de lubrification servant à acheminer l'huile filtrée vers les pièces mobiles du moteur à lubrifier, doivent être intégrées à la fonderie du carter d'huile, engendrant la réalisation de formes complexes et chères dans ladite fonderie.

La publication FR2789729-B1 divulgue un boîtier de filtration d'huile comprenant un corps cylindrique, un fond et un couvercle réunis par une tige centrale, le fond comprenant un ajutage d'entrée et un ajutage de sortie. Le fond et le couvercle sont constitués de pièces en matière plastique, qui sont moulées et sont munies d'inserts métalliques centraux présentant des alésages centraux filetés, reliés à la tige filetée à ses deux extrémités. Le corps est en alliage léger de type zamac. Le circuit de lubrification décrit dans ce document ne résout que partiellement les différents problèmes générés par les circuits de lubrification existants.

La publication EP1276974-A1 divulgue un module de carter inferieur pour moteurs combustion interne ainsi qu'à un procédé de fabrication de cette pièce par moulage par injection. Ce module de carter inférieur, qui est fixé au carter du moteur à combustion interne, retient l'alimentation en huile lubrifiante. Des pièces du système de circulation d'huile sont intégrées à ce module de carter inférieur. Ce module est fait d'un matériau thermoplastique à base de polyamide renforcé par des fibres de verre et/ou une matière minérale.

Un véhicule équipé d'un moteur, selon l'invention, comprend un circuit de lubrification destiné à lubrifier des pièces mobiles du moteur, tout en s'affranchissant des inconvénients rencontrés dans les circuits de lubrification existants.

Il est à noter que pour la suite de la description, les expressions « corps » et « corps rigide » sont équivalentes.

L'invention a pour objet un véhicule comprenant un moteur à combustion interne et un circuit de lubrification destiné à lubrifier des pièces mobiles du moteur, ledit moteur comprenant un carter inférieur d'huile et ledit circuit de lubrification étant doté d'un filtre à huile monté dans ledit carter.

Selon l'invention, le filtre à huile comprend un corps rigide non métallique, une cartouche filtrante logée dans le corps rigide et un couvercle non métallique, le corps rigide présentant une zone d'extrémité inférieure qui est coiffée par le couvercle, et une zone d'extrémité supérieure dotée d'un premier embout qui est inséré dans un segment amont du circuit de lubrification destiné à alimenter le filtre en huile, ladite zone supérieure étant dotée d'un deuxième embout qui est inséré dans un segment aval du circuit de lubrification destiné à acheminer l'huile filtrée vers les pièces du moteur à lubrifier. Pour cette configuration, le filtre à huile vient fermer le circuit de lubrification en se connectant directement à la fois au segment amont et au segment aval dudit circuit de lubrification. De cette manière, l'huile va se déplacer dans le segment amont avant de pénétrer dans le filtre à huile par le premier embout. L'huile passe ensuite par la cartouche filtrante où elle est nettoyée avant de ressortir dudit filtre à huile par le deuxième embout pour être envoyée via le segment aval vers des pièces mobiles du moteur à lubrifier. La cartouche filtrante se trouve sur le trajet de l'huile dans le filtre à huile, entre le premier embout et le deuxième embout. Il existe une communication fluidique entre le premier embout et le deuxième embout à l'intérieur du filtre à huile, à laquelle participe la cartouche filtrante. Avantageusement, le corps et le couvercle sont plus légers que s'ils avaient été réalisés en métal. Préférentiellement, le premier embout et le deuxième embout sont parallèles et s'étendent verticalement. Le couvercle, une fois qu'il a été fixé au corps du filtre à huile est situé sous ledit corps et obture celui-ci. Pour changer la cartouche filtrante, il suffit de retirer le couvercle du corps, puis de se saisir de la cartouche usagée avant de la retirer manuellement et sans effort du corps rigide. Une cartouche neuve est alors insérée sans effort particulier dans le corps rigide du filtre à huile, à l'emplacement de la cartouche usagée, puis le couvercle est refermé sur le corps. Le couvercle peut par exemple être vissé sur le corps ou être clipsé à celui-ci. Le couvercle et le corps peuvent être réalisés dans le même matériau. Préférentiellement, le segment amont du circuit de lubrification est muni d'une pompe à huile apte à faire circuler l'huile vers le filtre à huile.

Selon une caractéristique possible de l'invention, le corps s'étend verticalement, le couvercle représentant la partie la plus basse du filtre à huile, le premier embout et le deuxième embout représentant la partie la plus haute dudit filtre à huile. Pour changer une cartouche usagée, il faut accéder au couvercle du filtre à huile par le dessous du véhicule, puis procéder au retrait manuel de ce couvercle. Avantageusement, le couvercle affleure à une paroi du carter d'huile ou émerge légèrement de ladite paroi vers le bas.

Selon une caractéristique possible de l'invention, le premier embout et le deuxième embout sont venus de matière avec le corps rigide. De cette manière, le corps et les deux embouts constituent une pièce résultante commune, qui est fabriquée en une seule opération.

Selon une caractéristique possible de l'invention, un premier élément d'étanchéité est inséré entre le premier embout et une paroi délimitant le segment amont du circuit de lubrification, et un deuxième élément d'étanchéité est inséré entre le deuxième embout et une paroi délimitant le segment aval du circuit de lubrification. Il est fondamental d'assurer une bonne étanchéité entre le circuit de lubrification et le filtre à huile, sous peine d'engendrer des fuites d'huile entre ces deux éléments, qui pourraient conduire à une surconsommation d'huile ou à dysfonctionnement du moteur. Le premier élément d'étanchéité et le deuxième élément d'étanchéité peuvent par exemple être représentés par des joints toriques.

Selon une caractéristique possible de l'invention, la zone d'extrémité inférieure du corps rigide du filtre à huile se termine par une collerette élargie venant en appui contre une face inférieure du carter inférieur, ladite collerette élargie présentant au moins un orifice dans lequel passe une vis de fixation assurant l'arrimage du corps rigide du filtre à huile au carter inférieur du moteur. Avant que le corps rigide du filtre à huile ne soit fixé au carter d'huile, il subit d'abord une translation verticale vers le haut, pour pénétrer dans ledit carter, jusqu'à ce que la collerette élargie vienne en butée contre une face inférieure dudit carter d'huile. Le corps est ensuite arrimé audit carter au moyen de vis.

Selon une caractéristique possible de l'invention, le corps du filtre à huile est réalisé en matière plastique. De cette manière, il contribue à alléger le véhicule par rapport à un corps métallique. De plus, il peut être manié avec plus de facilité. Enfin, il peut avantageusement présenter des aptitudes à la déformation élastique, pouvant faciliter son insertion dans le carter d'huile, ainsi que l'insertion du premier embout et du deuxième embout respectivement dans le segment amont et le segment aval du circuit de lubrification.

Selon une caractéristique possible de l'invention, le couvercle et le corps du filtre à huile présentent chacun un filetage, de sorte que le couvercle se visse audit corps en étant à l'intérieur de celui-ci. Pour cette configuration, le couvercle peut par exemple présenter un tronçon cylindrique, fileté sur une face extérieure, et dont une extrémité est obturée par une paroi circulaire pleine permettant de coiffer le corps rigide du filtre à huile.

Selon une caractéristique possible de l'invention, le couvercle est réalisé en matière plastique. Cette matière plastique peut être identique ou différente de celle du corps du filtre à huile. Ce couvercle contribue à alléger le véhicule. En étant léger, le couvercle peut être manipulée aisément, sans avoir à développer une force particulière. Dans le cas où on accèderait au couvercle du filtre à huile par le dessous du véhicule, ledit couvercle pourra être fixé ou retiré facilement.

Selon une caractéristique possible de l'invention, le filtre à huile comporte un clapet de dérivation placé entre le premier embout et le deuxième embout, ledit clapet de dérivation permettant à l'huile issue du segment amont du circuit de lubrification de traverser le filtre à huile pour se retrouver dans le segment aval dudit circuit de lubrification sans passer par la cartouche filtrante. En effet, il peut arriver que la cartouche filtrante soit colmatée par des déchets ou autres particules indésirables, et dans ce cas, l'huile serait bloquée dans le filtre à huile par cette cartouche filtrante et ne pourrait donc plus circuler dans ledit filtre à huile. Le clapet de dérivation permet d'assurer une circulation d'huile en continu dans le filtre à huile, lorsque la cartouche filtrante est colmatée, évitant une situation critique pour laquelle la circulation d'huile serait interrompue dans ledit filtre et risquerait de conduire à un éclatement dudit filtre à huile.

L'invention a pour autre objet un filtre à huile pour la réalisation d'un véhicule selon l'invention.

Selon l'invention le filtre à huile comprend un corps rigide en matière plastique, une cartouche filtrante logée dans le corps rigide, un clapet de dérivation et un couvercle en plastique qui est vissé sur ledit corps, le corps rigide comprenant un premier embout matérialisant une arrivée d'huile dans ledit filtre à huile, et un deuxième embout matérialisant une sortie d'huile dudit filtre. Un tel filtre est ainsi directement prêt à l'emploi, en pouvant être monté tel quel, directement dans un carter d'huile d'un moteur à combustion interne d'un véhicule selon l'invention. Il viendra directement s'insérer dans un circuit de lubrification de pièces mobiles du moteur, en se connectant au segment amont et segment aval de ce circuit de lubrification.

Un véhicule à moteur selon l'invention présente l'avantage de posséder un filtre à huile allégé contribuant ainsi à diminuer le poids dudit véhicule. De plus, le filtre à huile est conçu de façon simplifiée, pour notamment permettre à un individu de pouvoir changer facilement la cartouche filtrante dans le cas où celle-ci serait colmatée, ce changement de cartouche s'effectuant sans effort particulier, avec des outils usuels du commerce. Il est à noter que ce changement s'effectue sans avoir à intervenir d'une quelconque façon que ce soit, à la structure du filtre à huile. Un véhicule selon l'invention présente enfin l'avantage de posséder un filtre à huile qui se connecte facilement au circuit de lubrification, au moyen d'une simple introduction du premier embout dans le segment amont du circuit de lubrification et d'une simple introduction du deuxième embout dans le segment aval dudit circuit de lubrification.

On donne ci-après une description détaillée d'un mode de réalisation préféré d'un véhicule selon l'invention, en se référant aux figures suivantes :
[Fig. 1] est une vue en perspective du dessous d'un véhicule selon l'invention, montrant un carter inférieur de moteur et un filtre à huile selon l'invention,
[Fig. 2] est une vue en perspective sous un autre angle du dessous du véhicule de la figure 1, le couvercle du filtre à huile étant vissé sur celui-ci,
[Fig. 3] est une vue en perspective du dessous du véhicule de la figure 2, le couvercle du filtre à huile étant dévissé et à distance dudit filtre à huile,
[Fig. 4] est une vue en perspective d'une zone particulière du dessous du véhicule de la figure 3, montrant une cartouche filtrante à distance du filtre à huile,
[Fig. 5] est la même vue que celle de la figure 1, certaines pièces autour du filtre ayant été artificiellement retirées pour visualiser le filtre à huile sous le véhicule,
[Fig. 6] est une vue en coupe d'un carter inférieur de moteur et d'un filtre à huile d'un véhicule selon l'invention,
[Fig. 7] est une vue de face d'une zone d'un véhicule selon l'invention, montrant le corps d'un filtre à huile arrimé au carter inférieur du moteur,
[Fig. 8] est une vue en perspective d'un corps de filtre à huile selon l'invention,
[Fig. 9] est une vue en perspective d'une zone du corps d'un filtre à huile selon l'invention, et d'une zone du carter inférieur du moteur destinée à recevoir ledit filtre à huile.

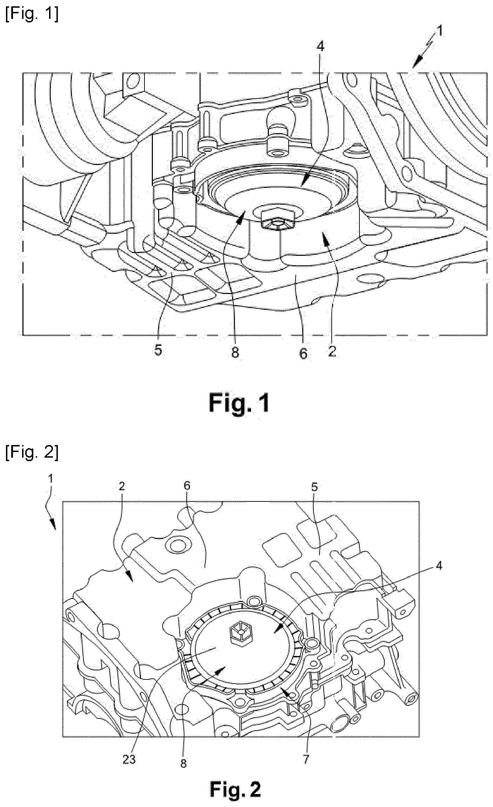

En se référant aux figures 1, 2, 5 et 6, un véhicule 1 selon l'invention comprend un moteur à combustion interne doté d'un carter inférieur 2 d'huile, et un circuit de lubrification 3 dudit moteur comprenant un filtre à huile 4. Le carter d'huile 2 est placé sous le moteur et présente une paroi inférieure 5 s'étendant dans un plan sensiblement horizontal, et dont une face inférieure 6 est située en regard d'un sol sur lequel reposerait le véhicule 1.

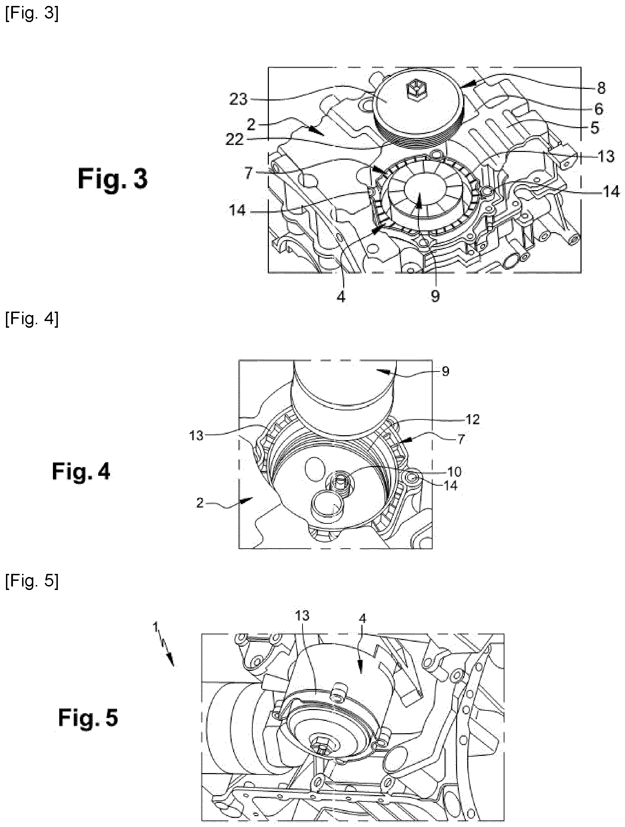

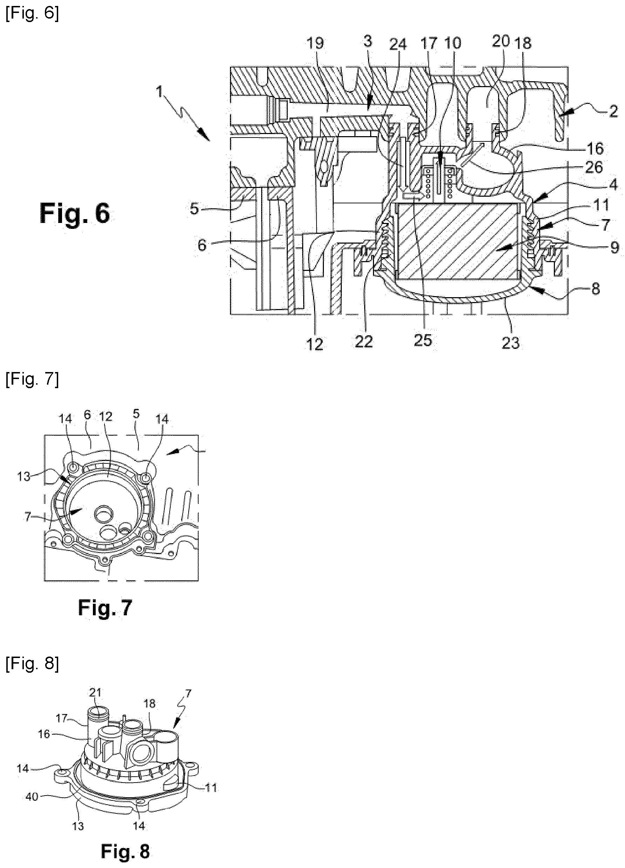

Le filtre à huile 4 comprend un corps 7 rigide en matière plastique, comme illustré aux figures 2, 3, 4, 5, 6, 7, 8 et 9, un couvercle 8 en matière plastique comme illustré aux figures 1,2, 3, 5 et 6, une cartouche filtrante 9 comme illustré aux figures 3, 4 et 6 et un clapet de dérivation 10 comme illustré aux figures 4 et 6.

En se référant aux figures 2, 3, 4, 6, 7 et 8, le corps 7 rigide du filtre à huile 4 comprend une zone d'extrémité inférieure 11 de forme sensiblement cylindrique, ladite zone 11 comprenant un filetage intérieur 12 et une collerette terminale 13 élargie.

En se référant aux figures 2, 3, 4, 7 et 8, cette collerette 13 élargie est assimilable à un bourrelet extérieur ayant une forme sensiblement annulaire, et comprend quatre orifices 14, équitablement répartis le long de ladite collerette 13. Chaque orifice 14 présente un insert métallique cylindrique 15 tapissant un canal interne délimité par ledit orifice 14, permettant de renforcer la tenue mécanique du corps 7 du filtre à huile 4, au niveau de ces orifices 14. Ces orifices 14 sont chacun destinés à être traversés par une de vis pour permettre d'arrimer le corps 7 du filtre à huile 4, à la paroi inférieure 5 du carter inférieur 2 d'huile.

En se référant aux figures 6, 8 et 9, le corps 7 du filtre à huile 4 comprend également une zone d'extrémité supérieure 16 présentant un premier embout 17 et un deuxième embout 18, lesdits deux embouts 17, 18 étant séparés et parallèles entre eux.

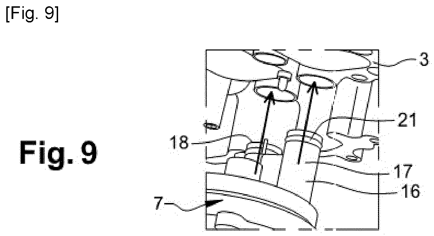

En se référant à la figure 9, les deux embouts 17, 18 sont cylindriques, le premier embout 17 étant destiné à être inséré dans un segment amont 19 du circuit de lubrification 3, et le deuxième embout 18 étant destiné à être inséré dans un segment aval 20 dudit circuit de lubrification 3. Le segment amont 19 comprend une pompe à huile et permet d'alimenter en huile le filtre à huile 4, et le segment aval 20 sert à acheminer l'huile qui a été filtrée par le filtre à huile 4 vers des pièces mobiles du moteur à lubrifier. Afin d'assurer une bonne étanchéité entre les deux embouts 17, 18 du corps 7 du filtre à huile 4, et les parois du carter d'huile 2 délimitant les deux segments amont et aval 19, 20 du circuit de lubrification 3, un joint torique 21 est inséré dans une gorge annulaire de chacun desdits deux embouts 17, 18 dans le but d'être comprimé contre lesdites parois.

En se référant à la figure 6, avant d'être fixé à la paroi inférieure 5 du carter d'huile 2, le corps 7 du filtre à huile 4 est inséré par le dessous du véhicule dans un emplacement dudit carter d'huile 2 réservé à cet effet, cette insertion s'effectuant d'abord par la zone d'extrémité supérieure 16 dudit corps 7. Cette insertion est suivie d'une translation verticale au cours de laquelle le premier embout 17 et le deuxième embout 18 pénètrent respectivement dans le segment amont 19 et le segment aval 20 du circuit de lubrification 3, cette translation étant stoppée par une mise en butée de la collerette élargie 13 contre la face inférieure 6 de la paroi inférieure 5 du carter d'huile 2. Des vis passant par les orifices 14 de la collerette élargie 13 permettent d'arrimer le corps 7 rigide du filtre à huile 4, au carter d'huile 2. Les figures 2, 3, 4 et 7 montrent le corps 7 du filtre à huile 4, une fois que celui-ci a été fixé à la paroi inférieure 5 du carter d'huile 4. Il est à noter qu'un joint 40 s'étendant sur toute la longueur de la collerette élargie 13 du corps 7 du filtre à huile 4, est comprimé entre ladite collerette élargi 13 et la face inférieure 6 de la paroi inférieure 5 du carter d'huile 2, pour assurer une bonne étanchéité entre le corps 7 du filtre à huile 4 et la paroi inférieure 5 du carter d'huile 2 lorsque ledit corps 7 est fixé à ladite paroi inférieure 5.

En se référant aux figures 2, 3 et 6, le couvercle 8 comprend un tronçon cylindrique 22 délimitant un canal interne, et dont une surface extérieure présente un filetage. Ce tronçon cylindrique 22 comporte une première extrémité qui est ouverte, et une deuxième extrémité qui est obturée par une paroi circulaire 23 pleine et légèrement bombée, lesdites deux extrémités étant à considérer le long de l'axe de révolution du tronçon 22 cylindrique.

En se référant aux figures 3 et 6, la cartouche filtrante 9 est de forme cylindrique et vient s'insérer dans un logement cylindrique du corps 7 du filtre à huile 4. Lorsque le corps 7 du filtre à huile 4 a été fixé au carter d'huile 2 du moteur et lorsque la cartouche filtrante 9 a été placée dans le logement de ce corps 7, elle émerge dudit corps 7 vers le bas comme l'illustre la figure 3. En d'autres termes, cette cartouche filtrante 9 émerge de la zone d'extrémité inférieure 11 du corps 7 du filtre à huile 4. Le couvercle 8 est ensuite vissée dans cette zone d'extrémité inférieure 11, en coiffant la cartouche filtrante 9. Une fois que le couvercle 8 a été vissé sur le corps 7 du filtre à huile 4, la paroi circulaire 23 pleine et légèrement bombée du couvercle 8, représente la partie la plus basse du filtre à huile 4 et coiffe la cartouche filtrante 9.

En se référant à la figure 6, la cartouche filtrante 9 est placée dans le corps 7 du filtre à huile 4, en étant située en retrait du premier embout 17 et du deuxième embout 18, pour permettre à l'huile entrant par ledit premier embout 17 de traverser la cartouche filtrante 9 avant de ressortir dudit filtre à huile 4 par le deuxième embout 18.

En se référant aux figures 4 et 6, dans le cas où la cartouche filtrante 9 serait colmatée par des déchets, le filtre à huile 4 comprend un clapet de dérivation 10, placé dans le corps 7 du filtre à huile 4, entre le premier embout 17 et le deuxième embout 18. Comme la cartouche filtrante 9 est bouchée, l'huile en provenance du premier embout 17 s'agglutine dans le filtre à huile 4, en amont de ladite cartouche filtrante 9. Sous l'effet de la pression générée par cet amas d'huile en amont de la cartouche filtrante 9, le clapet 10 de dérivation finit par se soulever, créant un passage vers le deuxième embout 18, comme l'indiquent les trois flèches 24, 25, 26 de la figure 6. L'huile peut alors être acheminée vers le deuxième embout 18 sans avoir été filtrée, avant de lubrifier les pièces mobiles du moteur via le segment aval 20 du circuit de lubrification 3. De cette manière, grâce à la présence de ce clapet de dérivation 10, le filtre à huile 4 ne va pas éclater sous l'effet de la pression engendrée par l'accumulation d'huile dans ledit filtre 4, en amont de la cartouche filtrante 9.

Dans un véhicule 1 selon l'invention, le remplacement de la cartouche filtrante 9 s'effectue très simplement en suivant les étapes suivantes :
- une étape d'accès au filtre à huile 4 par le dessous du véhicule 1,
- une étape de dévissage manuel du couvercle 8,
- une étape de retrait dudit couvercle 8,
- une étape de retrait de la cartouche filtrante 9 usagée au moyen d'une translation vers le bas hors du corps 7 du filtre à huile 4,
- une étape d'insertion d'une nouvelle cartouche filtrante 9 dans le corps 7 du filtre à huile 4, au moyen d'une translation vers le haut de ladite cartouche 9 dans ledit corps 7,
- une étape de vissage du couvercle 8 sur le corps 7 du filtre à huile 4.

## Revendications

1. Véhicule (1) comprenant un moteur à combustion interne et un circuit de lubrification (3) destiné à lubrifier des pièces mobiles du moteur, ledit moteur comprenant un carter inférieur (2) d'huile et ledit circuit de lubrification (3) étant doté d'un filtre à huile (4) monté dans ledit carter (2), le filtre à huile (4) comprenant un corps rigide (7) non métallique, une cartouche filtrante (9) logée dans le corps rigide (7) et un couvercle (8) non métallique, et le corps rigide (7) présentant une zone d'extrémité inférieure (11) qui est coiffée par le couvercle (8), et une zone d'extrémité supérieure (16), le véhicule (1) **caractérisé en ce que** la zone d'extrémité supérieure (16) est dotée d'un premier embout (17) qui est inséré dans un segment amont (19) du circuit de lubrification (3) destiné à alimenter le filtre (4) en huile, ladite zone supérieure (16) étant dotée d'un deuxième embout (18) qui est inséré dans un segment aval (20) du circuit de lubrification (3) destiné à acheminer l'huile filtrée vers les pièces du moteur à lubrifier.

2. Véhicule selon la revendication 1, **caractérisé en ce que** le corps (7) s'étend verticalement, et **en ce que** le couvercle (8) représente la partie la plus basse du filtre (4) à huile, le premier embout (17) et le deuxième embout (18) représentant la partie la plus haute dudit filtre (4) à huile.

3. Véhicule selon l'une quelconque des revendications 1 ou 2,
**caractérisé en ce que** le premier embout (17) et le deuxième embout (18) sont venus de matière avec le corps rigide (7).

4. Véhicule selon l'une quelconque des revendications 1 à 3,
**caractérisé en ce qu'**un premier élément d'étanchéité (21) est inséré entre le premier embout (17) et une paroi délimitant le segment amont (19) du circuit de lubrification (3), et **en ce qu'**un deuxième élément d'étanchéité (21) est inséré entre le deuxième embout (18) et une paroi délimitant le segment aval (20) du circuit de lubrification (3).

5. Véhicule selon l'une quelconque des revendications 1 à 4,
**caractérisé en ce que** la zone d'extrémité inférieure (11) du corps rigide (7) du filtre (4) à huile se termine par une collerette élargie (13) venant en appui contre une face inférieure (6) du carter inférieur (2), et **en ce que** ladite collerette élargie (13) présente au moins un orifice (14) dans lequel passe une vis de fixation assurant l'arrimage du corps rigide (7) du filtre (4) à huile au carter inférieur (2) du moteur.

6. Véhicule selon l'une quelconque des revendications 1 à 5,
**caractérisé en ce que** le corps (7) du filtre (4) à huile est réalisé en matière plastique.

7. Véhicule selon l'une quelconque des revendications 1 à 6,
**caractérisé en ce que** le couvercle (8) et le corps (7) du filtre (4) à huile présentent chacun un filetage, de sorte que le couvercle (8) se visse audit corps (7) en étant à l'intérieur de celui-ci.

8. Véhicule selon l'une quelconque des revendications 1 à 7,
**caractérisé en ce que** le couvercle (8) est réalisé en matière plastique.

9. Véhicule selon l'une quelconque des revendications 1 à 8,
**caractérisé en ce que** le filtre (4) à huile comporte un clapet (10) de dérivation, placé entre le premier embout (17) et le deuxième embout (18), et ce que ledit clapet (10) de dérivation permet à l'huile issue du segment amont (19) du circuit de lubrification (3) de traverser le filtre (4) à huile pour se retrouver dans le segment aval (20) dudit circuit de lubrification (3) sans passer par la cartouche filtrante (9).

10. Filtre à huile (4) pour la réalisation d'un véhicule selon l'une quelconque des revendications 1 à 9, **caractérisé en ce qu'**il comprend un corps rigide (7) en matière plastique, une cartouche filtrante (9) logée dans le corps (7), un clapet (10) de dérivation et un couvercle (8) en plastique qui est vissé sur ledit corps (7), et **en ce que** le corps (7) comprend un premier embout (17) matérialisant une arrivée d'huile dans ledit filtre (4) à huile et un deuxième embout (18) matérialisant une sortie d'huile dudit filtre (4).

## Patentansprüche

1. Fahrzeug (1) umfassend einem Verbrennungsmotor und einem Schmierkreislauf (3) zur Schmierung beweglicher Teile des Motors, wobei der genannte Motor eine untere Ölwanne (2) umfasst und der genannte Schmierkreislauf (3) mit einem in der genannten Ölwanne (2) angeordneten Ölfilter (4) versehen ist, wobei der Ölfilter (4) ein nichtmetallisches starres Gehäuse (7), eine im starren Gehäuse (7) angeordnete Filterpatrone (9) sowie einen nichtmetallischen Deckel (8) umfasst, und wobei das starre Gehäuse (7) einen unteren Endbereich (11) aufweist, der von dem Deckel (8) abgedeckt ist, sowie einen oberen Endbereich (16), wobei das Fahrzeug (1) **dadurch gekennzeichnet ist, dass** der obere Endbereich (16) mit einem ersten Anschlussstutzen (17) versehen ist, der in einen stromaufwärts gelegenen Abschnitt (19) des Schmierkreislaufs (3) eingesetzt ist, der dazu bestimmt ist, den Filter (4) mit Öl zu versorgen, wobei der genannte obere Endbereich (16) ferner mit einem zweiten Anschlussstutzen (18) versehen ist, der in einen stromabwärts gelegenen Abschnitt (20) des Schmierkreislaufs (3) eingesetzt ist, der dazu bestimmt ist, das gefilterte Öl zu den zu schmierenden Motorteilen zu leiten.

2. Fahrzeug nach Anspruch 1, **dadurch gekennzeichnet, dass** sich das Gehäuse (7) vertikal erstreckt und dass der Deckel (8) den untersten Teil des Ölfilters (4) bildet, wobei der erste Anschlussstutzen (17) und der zweite Anschlussstutzen (18) den obersten Teil des genannten Ölfilters (4) bilden.

3. Fahrzeug nach einem der Ansprüche 1 oder 2, **dadurch gekennzeichnet, dass** der erste Anschlussstutzen (17) und der zweite Anschlussstutzen (18) einstückig mit dem starren Gehäuse (7) ausgebildet sind.

4. Fahrzeug nach einem der Ansprüche 1 bis 3, **dadurch gekennzeichnet, dass** ein erstes Dichtelement (21) zwischen dem ersten Anschlussstutzen (17) und einer den stromaufwärts gelegenen Abschnitt (19) des Schmierkreislaufs (3) begrenzenden Wand angeordnet ist, und dass ein zweites Dichtelement (21) zwischen dem zweiten Anschlussstutzen (18) und einer den stromabwärts gelegenen Abschnitt (20) des Schmierkreislaufs (3) begrenzenden Wand angeordnet ist.

5. Fahrzeug nach einem der Ansprüche 1 bis 4, **dadurch gekennzeichnet, dass** der untere Endbereich (11) des starren Gehäuses (7) des Ölfilters (4) in einen erweiterten Flansch (13) ausläuft, der an einer unteren Fläche (6) der unteren Ölwanne (2) anliegt, und dass der genannte erweiterte Flansch (13) mindestens eine Öffnung (14) aufweist, durch welche eine Befestigungsschraube hindurchgeführt ist, die die Befestigung des starren Gehäuses (7) des Ölfilters (4) an der unteren Ölwanne (2) des Motors gewährleistet.

6. Fahrzeug nach einem der Ansprüche 1 bis 5, **dadurch gekennzeichnet, dass** das Gehäuse (7) des Ölfilters (4) aus Kunststoff hergestellt ist.

7. Fahrzeug nach einem der Ansprüche 1 bis 6, **dadurch gekennzeichnet, dass** der Deckel (8) und das Gehäuse (7) des Ölfilters (4) jeweils ein Gewinde aufweisen, sodass der Deckel (8) in das genannte Gehäuse (7) eingeschraubt ist.

8. Fahrzeug nach einem der Ansprüche 1 bis 7, **dadurch gekennzeichnet, dass** der Deckel (8) aus Kunststoff hergestellt ist.

9. Fahrzeug nach einem der Ansprüche 1 bis 8, **dadurch gekennzeichnet, dass** der Ölfilter (4) ein Bypass-Ventil (10) umfasst, das zwischen dem ersten Anschlussstutzen (17) und dem zweiten Anschlussstutzen (18) angeordnet ist, und dass das genannte Bypass-Ventil (10) ermöglicht, dass das Öl aus dem stromaufwärts gelegenen Abschnitt (19) des Schmierkreislaufs (3) den Ölfilter (4) passiert und in den stromabwärts gelegenen Abschnitt (20) des genannten Schmierkreislaufs (3) gelangt, ohne die Filterpatrone (9) zu durchströmen.

10. Ölfilter (4) zur Verwendung in einem Fahrzeug nach einem der Ansprüche 1 bis 9, **dadurch gekennzeichnet, dass** er ein starres Gehäuse (7) aus Kunststoff, eine im Gehäuse (7) angeordnete Filterpatrone (9), ein Bypass-Ventil (10) und einen aus Kunststoff hergestellten Deckel (8) umfasst, der auf das genannte Gehäuse (7) aufgeschraubt ist, und dass das Gehäuse (7) einen ersten Anschlussstutzen (17) zur Ölzufuhr in den genannten Ölfilter (4) sowie einen zweiten Anschlussstutzen (18) zur Ölableitung aus dem genannten Ölfilter (4) umfasst.

## Claims

1. A vehicle (1) comprising an internal combustion engine and a lubrication circuit (3) designed to lubricate the moving parts of the engine, said engine comprising a lower oil sump (2) and said lubrication circuit (3) having an oil filter (4) mounted on said oil sump (2), the oil filter (4) comprising a non-metallic rigid body (7), a filter cartridge (9) housed in the rigid body (7) and a non-metallic cover (8), and the rigid body (7) having a lower end zone (11) which is capped by the cover (8), and an upper end zone (16), the vehicle (1) **characterized in that** the upper end zone (16) has a first nozzle (17) which is inserted into an upstream segment (19) of the lubrication circuit (3) for supplying the filter (4) with oil, said upper zone (16) having a second nozzle (18) which is inserted into a downstream segment (20) of the lubrication circuit (3) designed to convey the filtered oil to the engine parts to be lubricated.

2. The vehicle according to claim 1, **characterized in that** the body (7) extends vertically, and **in that** the cover (8) represents the lowest part of the oil filter (4), the first nozzle (17) and the second nozzle (18) representing the highest part of said oil filter (4).

3. The vehicle according to any of claims 1 or 2, **characterized in that** the first end piece (17) and the second end piece (18) are integral with the rigid body (7).

4. The vehicle according to any of claims 1 to 3, **characterized in that** a first sealing element (21) is inserted between the first nozzle (17) and a wall delimiting the upstream segment (19) of the lubrication circuit (3), and **in that** a second sealing element (21) is inserted between the second nozzle (18) and a wall delimiting the downstream segment (20) of the lubrication circuit (3).

5. The vehicle according to any of claims 1 to 4, **characterized in that** the lower end zone (11) of the rigid body (7) of the oil filter (4) terminates in an enlarged collar (13) bearing against a lower face (6) of the lower oil sump (2), and **in that** said enlarged collar (13) has at least one hole (14) through which a fixing screw passes to secure the rigid body (7) of the oil filter (4) to the engine's lower oil sump (2).

6. The vehicle according to any of claims 1 to 5, **characterized in that** the body (7) of the oil filter (4) is made of plastic material.

7. The vehicle according to any of claims 1 to 6, **characterized in that** the cover (8) and the body (7) of the oil filter (4) are each threaded, so that the cover (8) screws into said body (7).

8. The vehicle according to any of claims 1 to 5, **characterized in that** the body (7) of the oil filter (4) is made of plastic material.

9. The vehicle according to any of claims 1 to 8, **characterized in that** the oil filter (4) has a bypass valve (10), placed between the first nozzle (17) and the second nozzle (18), and that said bypass valve (10) allows the oil from the upstream segment (19) of the lubrication circuit (3) to pass through the oil filter (4) to reach the downstream segment (20) of said lubrication circuit (3) without passing through the filter cartridge (9).

10. An oil filter (4) for producing a vehicle according to any of claims 1 to 9, **characterized in that** it comprises a rigid plastic body (7), a filter cartridge (9) housed in the body (7), a bypass valve (10) and a plastic cover (8) which is screwed onto said body (7), and **in that** the body (7) comprises a first nozzle (17) forming an oil inlet to said oil filter (4) and a second nozzle (18) forming an oil outlet from said filter (4).
